# EUROPÄISCHE PATENTANMELDUNG

(11) **EP 1 055 560 A1**
(43) Veröffentlichungstag der Anmeldung: **29.11.2000**
(21) Anmeldenummer: 99810448.3
(22) Anmeldetag: 25.05.1999
(51) Int. Cl.: B60R 9/042

(54) **Lade- und Abladevorrichtung für eine in Längsrichtung auf einem Fahrzeugdach liegend zu transportierende Last**

(71) Anmelder: Tony Brändle AG Wil, 9500 Wil (CH)
(72) Erfinder: Oberhänsli, Franz, 9607 Mosnang (CH)
(74) Vertreter: Ryffel, Rolf

(57) **Zusammenfassung**

Die Vorrichtung besitzt eine langgestreckte Lasthalterung (6) und eine Antriebseinrichtung (8) zum Bewegen der Lasthalterung (6) aus einer etwa horizontalen Lage auf dem Fahrzeugdach (3) in eine geneigte Lage (6.1) hinter dem Fahrzeugheck (7). Die Lasthalterung (6) trägt ein Halteelement (9) für die Last (5), welches durch wenigstens einen Linearantrieb entlang der Lasthalterung (6) bewegbar ist. Ein zweiter Linearantrieb dient dem Bewegen der Lasthalterung (6) relativ zum Fahrzeugdach (3) in Längsrichtung nach hinten zum Fahrzeugheck (7). Die Vorrichtung eignet sich besonders zum Aufladen und Abladen von schweren, mehrteiligen Feuerwehrleitern, die mit der Vorrichtung mechanisiert praktisch vollständig bis auf den Fussboden abgesenkt werden können.

## Beschreibung

Die Erfindung betrifft eine Lade- und Abladevorrichtung für eine langgestreckte, in Längsrichtung auf einem Fahrzeugdach zu transportierende Last insbesondere eine schwere Feuerwehrleiter, mit den Merkmalen des Oberbegriffs des unabhängigen Patentanspruchs 1.

Zur Ausrüstung von Rettungsfahrzeugen, insbesondere Feuerwehrfahrzeugen, gehört in der Regel wenigstens eine Leiter, die platzsparend und relativ leicht zugänglich auf dem Dach des Fahrzeugs liegend transportiert werden kann. Rettungsfahrzeuge mit auf dem Dach angebrachten Halterungen für wenigstens eine Leiter sind in verschiedenen Ausführungen bekannt. Je nach Ausführung kann dabei eine Person zur Bedienung ausreichen, da die Leiterhalterung mittels einer Mechanik vom Dach hinunter bewegbar ist. Üblicherweise kommt die Leiterhalterung mit der darauf liegenden Leiter beinahe aufrecht hinter dem Fahrzeugheck zu stehen. Das weitere Vorgehen, nämlich das Trennen der Leiter von der Leiterhalterung und das Überführen der Leiter in eine horizontale Position zum weiteren Transport, obliegt allein der Bedienungsmannschaft. Dies ist im Fall von kurzen, leichteren Leitern wenig problematisch. Insbesondere für die von Feuerwehrfahrzeugen transportierten, sehr schweren mehrteiligen Leitern ist dieses Vorgehen jedoch unbefriedigend. Derartige Leitern können bis zu 100 kg wiegen und erfordern zur sicheren Handhabung aus der Vertikalen heraus mehrere Personen. Insbesondere das Abheben von der Leiterhalterung erfordert enormen Kraftaufwand und grosse Sorgfalt. Bei Rettungseinsätzen oder Bränden ist es jedoch wünschenswert, mit einem Minimum an Aufwand von Personen und Zeit das vollständige Abladen einer solch schweren Leiter mit der nötigen Sorgfalt durchführen zu können.

EP 461 709 beschreibt eine Leiterhalterung, die durch eine manuell bediente Vorrichtung auf dem Dach des Fahrzeugs an einem Ende angehoben wird und dann über das Fahrzeugheck zu Boden gleitet. Die Leiter ist fest auf der Leiterhalterung montiert. In der Endposition ist die Leiterhalterung steil an das Heck des Fahrzeugs angelehnt. Beim Wiederbeladen muss das volle Gewicht der Leiter allein durch die Körperkraft des Bedienenden mittels eines Hebelarms kompensiert werden.

FR 9203539 beschreibt eine sehr ähnliche Vorrichtung zum Be- und Entladen von Leitern oder ähnlichen Lasten. Nur wird hier der die Leiterhalterung aufrichtende Tragrahmen von einer Hydraulik bedient. Wiederum jedoch kommt in der Endposition die Lasthalterung aufrecht hinter dem Heck des Fahrzeuges zu stehen. Es ist keine Vorrichtung zum Bewegen der Last von der Lasthalterung vorgesehen.

CH 684 256 beschreibt eine Leiterhalterung für Fahrzeugdächer, bei der ein Antrieb, vorzugsweise eine Hydraulik, die Lasthalterung parallel zum Fahrzeugdach nach hinten über das Fahrzeugheck hinausbewegt. Die Lasthalterung ist nicht direkt am Antrieb befestigt, sondern mit diesem nur über einen angelenkten Tragrahmen verbunden. Infolge der Verlagerung des Schwerpunkts der Leiterhalterung über das Fahrzeugheck hinaus kippt die Leiter nach unten zum Boden und wird in dieser Bewegung durch den mit ausschwenkenden Tragrahmen kontrolliert. Der Tragrahmen folgt dabei nur passiv der Bewegung der Leiterhalterung bzw. des Antriebs. Die Leiterhalterung ragt in der Endposition steil hinter dem Fahrzeugheck auf Die Leiter ist fix an der Leiterhalterung montiert. Es ist keine Vorrichtung zum Beladen der Leiterhalterung vorgesehen.

Aufgabe der vorliegenden Erfindung ist es, die Nachteile des Bekannten zu vermeiden und eine Lade- und Abladevorrichtung für langgestreckte, auf dem Dach eines Fahrzeugs, insbesondere eines Feuerwehrfahrzeugs oder anderen Lastkraftwagens, liegend zu transportierende, schwere Lasten zu schaffen. Die Ladevorrichtung soll das rasche und weitgehendst automatisierte Be- und Entladen, insbesondere von schweren, mehrteiligen Feuerwehrleitern, ermöglichen, ohne dass mehr als eine Person zur Bedienung erforderlich ist.

Erfindungsgemäss wird die Aufgabe durch eine Ladevorrichtung gemäss den Merkmalen des kennzeichnenden Teils des unabhängigen Patentanspruchs 1 gelöst.

Die Lade- und Abladevorrichtung verfügt über eine Antriebseinrichtung zum Bewegen der Lasthalterung aus einer stabilen horizontalen Lage auf dem Fahrzeugdach heraus in eine instabile, z.B. über das Fahrzeugheck geneigte Lage. Die Neigung ergibt sich durch die Bewegung des Schwerpunktes der Last und Lasthalterung über den hinteren Rand des Fahrzeugdaches hinaus.

Die langgestreckte Lasthalterung, die im Allgemeinen an die Länge der zu transportierenden Last angepasst ist, verfügt als kennzeichnendes Merkmal über ein Halteelement für die Last. Dieses Halteelement kann durch wenigstens einen Linearantrieb entlang der Lasthalterung bewegt werden. Ein derartiges Halteelement kann z.B. ein einfaches Profilblech sein, das zwischen den obersten beiden Sprossen einer mehrteiligen zusammengeschobenen Leiter angreift. Vorteil einer solchen Lasthalterung ist, dass nachdem die Lasthalterung über den hinteren Rand des Fahrzeugdaches schräg nach unten gekippt worden ist, das Bewegen des Halteelements mittels des Antriebs die Last automatisch auf den Boden ablegt bzw. beim ungekehrten Vorgang des Beladens die Last vom Boden aufnimmt und auf die Lasthalterung zieht. Lediglich das Befestigen der Last am Halteelement durch Einhängen oder sonstige Verbindungsmittel erfordert die unmittelbare Intervention der Bedienungsmannschaft. Der gesamte restliche Be- oder Entladevorgang kann von einer einzelnen Person gesteuert werden. Verschiedene Antriebseinrichtungen, wie pneumatischer oder hydraulischer Antrieb oder elektrisch betriebene, über Umlenkrollen geführte Seil- oder Kettenzüge sind denkbar. Die Lasthalterung dient dem Halteelement zumindest als Führung. Vorzugsweise wird der das Halteelement bewegende Linearantrieb ein kolbenstangenloser Pneumatikzylinder sein, dessen Kolben mit dem Halteelement gekoppelt ist. Ein solcher Zylinder bietet den Vorteil, dass er unmittelbar in den Rahmenquerschnitt der Lasthalterung integriert werden kann und von den auf schweren Lastkraftwagen, insbesondere Feuerwehrfahrzeugen, ohnehin vorhandenen Luftkompressoren betrieben werden kann. Die Verwendung eines solchen pneumatisch betriebenen Zylinders macht also die Verwendung zusätzlicher Antriebsaggregate am Fahrzeug überflüssig und erlaubt eine platzsparende Auslegung des Lastelements in Leichtbauweise.

Die Vorrichtung kann über einen zweiten Linearantrieb zum Bewegen der Lasthalterung parallel zum Fahrzeugdach in Längsrichtung des Fahrzeugs verfügen. Diese Bewegung entspricht dem ersten Schritt des Abladevorganges, wenn nämlich durch Verschieben der Lasthalterung der Schwerpunkt über den hinteren Rand des Fahrzeugdaches hinaus verschoben wird. Diese Funktion ist wichtig, um bei langen Lasten oder Leitern als Folge des Abkippens über das Heck des Fahrzeugs ein zu hohes Aufragen über das Fahrzeugdach zu vermeiden. So dürfen z.B. Feuerwehrfahrzeuge in der Innenstadt bei einer Fahrzeughöhe von ca. 3 m während des Entladens eine lichte Höhe von 4,50 m nicht überschreiten.

Der zweite Linearantrieb kann pneumatisch oder hydraulisch betrieben werden, oder über Umlenkrollen und Seile oder Kettenzüge seine Funktion ausüben. Es sind verschiedene Ausführungen der Verbindung mit der das Halteelement tragenden Lasthalterung denkbar. Zum Beispiel könnte die Lasthalterung schienenartig entlang einer zweiten, in etwa so langen Halterung durch den zweiten Linearantrieb bewegt werden. Eine solche teleskopische Ausführung hätte jedoch den Nachteil, dass die lichte Höhe der Gesamtvorrichtung während des Entladevorgangs grösser ist als erwünscht.

Vorzugsweise wird daher die Lasthalterung auf einem Tragrahmen angeordnet sein. Der auf dem Fahrzeugdach befestigte Tragrahmen ist um eine zum hinteren Rand des Fahrzeugdaches parallel angeordnete Achse schwenkbar. Der Tragrahmen ist mit der Antriebseinrichtung verbunden.

Vorzugsweise wird der zweite, der horizontalen Bewegung der Lasthalterung relativ zum Fahrzeugdach dienende Linearantrieb die Lasthalterung mit dem Tragrahmen beweglich koppeln. Eine derartige Anordnung hat den Vorteil, dass die Lasthalterung in ihrer Gesamtheit den Tragrahmen als Führung benutzen kann. In der gekippten Position ist die Gesamthöhe der Anordnung dann gering. Der zweite Linearantrieb ist vorzugsweise ebenfalls ein kolbenstangenloser Pneumatikzylinder, der von dem im Fahrzeug vorhandenen Kompressor und Druckluftvorrichtungen angesteuert werden kann.

Eine bevorzugte Ausführungsform der Erfindung wären dann zumindest auf einer Seite paarig angeordnete Pneumatikzylinder, die zugleich als tragende Elemente der Lasthalterung dienen. Die Zylinder sind vorzugsweise fest miteinander verbunden und verbinden als Hohlprofilkörper die Vorteile von geringem Gewicht und grösserer Stabilität.

Vorzugsweise wird auch die dem Schwenken der Lasthalterung dienende Antriebseinrichtung aus wenigstens einem Pneumatikzylinder bestehen, der einerseits am Fahrzeugdach und andererseits am Tragrahmen angelenkt ist. Wiederum ist ein wesentlicher Vorteil einer solchen Ausführung, dass auf die vorhandenen Kompressions- und Druckluftvorrichtungen des Fahrzeugs zurückgegriffen werden kann. Beim Abladen der Leiter kann ein solcher Pneumatikzylinder passiv das Abwärtsschwenken der Last verzögern und dämpfen. Beim Aufnehmen der Last wird hingegen die Hubwirkung für die Lasthalterung allein von dieser Antriebseinrichtung ausgeübt. Es ist aber auch denkbar, das Wirken der Antriebseinrichtung mit dem des zweiten Linearantriebs geeignet zu kombinieren, um so einen synergistischen Effekt zu erzielen. Es ist auch vorstellbar, die Antriebseinrichtung als Ölhydraulik mit grösserer Kraftwirkung auszulegen.

Vorzugsweise wird das Halteelement ein haken- oder C-förmiges oder ähnlich geformtes Teil zur Aufnahme der Last, z.B. einer Leitersprosse, aufweisen. Dies erlaubt ein denkbar einfaches, schnelles Auf- und Abnehmen der Last vom und auf das Halteelement. Um hinreichende Stabilität während des Liegendtransports auf dem Fahrzeugdach zu gewährleisten, kann am oberen Ende der Lasthalterung ein Gegenelement befestigt sein, das in der Endstellung der aufgenommenen Last die Öffnung des Halteelementes abdeckt und so verschliesst. Ein Verrutschen der Last vom Halteelement während des Transports wird so verhindert.

Vorzugsweise wird eine zur Verwendung mit der erfindungsgemässen Ladevorrichtung bestimmte Last an ihrem unteren Ende über ein abnehmbares Abschlusselement verfügen, das seitlich mit Laufrollen versehen ist. Bei einem solchen Abschlusselement wird es sich vorzugsweise um ein einfaches stabiles Profilblech handeln, das das untere Ende einer Leiter wie eine Kartusche umfasst, einfach zu befestigen ist und dessen zwei Laufrollen dafür sorgen, dass die langgestreckte Last während des Lade- oder Abladevorganges mit der erfindungsgemässen Vorrichtung beweglich auf dem Erdboden abgestützt ist. Der über das Halteelement vermittelten Bewegung der Last wird so kein Widerstand entgegensetzt.

Eine bevorzugte Ausführungsform der Erfindung ist in den Figuren nachfolgend dargestellt. Es sind aber auch andere Ausführungsformen denkbar, die sich vor allem in der Natur der Antriebe unterscheiden. Die in den Figuren dargestellte Ausführungsform benutzt ausschliesslich pneumatische Antriebe, die auf die ohnehin im Fahrzeug vorhandenen Kompressoren und Druckluftvorrichtung zurückgreifen. Es zeigen:
- Figur 1: eine Seitenansicht eines Feuerwehrfahrzeuges mit Darstellung einer schweren, mehrteiligen Leiter im Transport und in Abladeposition,
- Figur 2: eine Seitenansicht der Ladevorrichtung allein, ohne Fahrzeug,
- Figur 3: eine Draufsicht auf die Ladevorrichtung,
- Figur 4: einen Querschnitt durch die Lasthalterung,
- Figur 5: einen schematisierten Bewegungsablauf der Lasthalterung: Horizontalbewegung,
- Figur 6: einen schematischen Bewegungsablauf: Kippbewegung, und
- Figur 7: einen schematischen Bewegungsablauf: Hinunterfahren des Halteelementes.

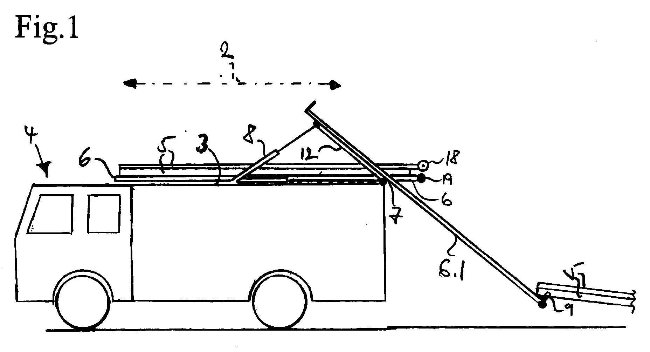

Figur 1 zeigt eine Seitenansicht eines Feuerwehrfahrzeuges 4 mit Darstellung der Lade- und Abladevorrichtung für eine langgestreckte Last 5, hier eine zweiteilige Feuerwehrleiter. Im gezeichneten Zustand ist die Last 5 für den Transport etwa in Längsrichtung des Fahrzeugs 4 auf dem Dach 3 des Fahrzeugs liegend angeordnet. Die Last 5, hier eine schwere Feuerwehrleiter, ruht auf einer etwa gleich langen Lasthalterung 6. Eine noch zu erläuternde Antriebseinrichtung dient dazu, die Lasthalterung 6 in eine geneigte Lage 6.1 zu bewegen, in der sich ein Teil der Lasthalterung hinter einem hinteren Rand 7 des Fahrzeugdachs 3 schräg nach unten erstreckt, und umgekehrt. Die Lasthalterung 6 ist auf einem Tragrahmen 12 verschiebbar angeordnet, der auf dem Fahrzeugdach 3 um eine zum hinteren Rand 7 des Fahrzeugdachs 3 etwa parallele Achse 13 schwenkbar montiert ist.

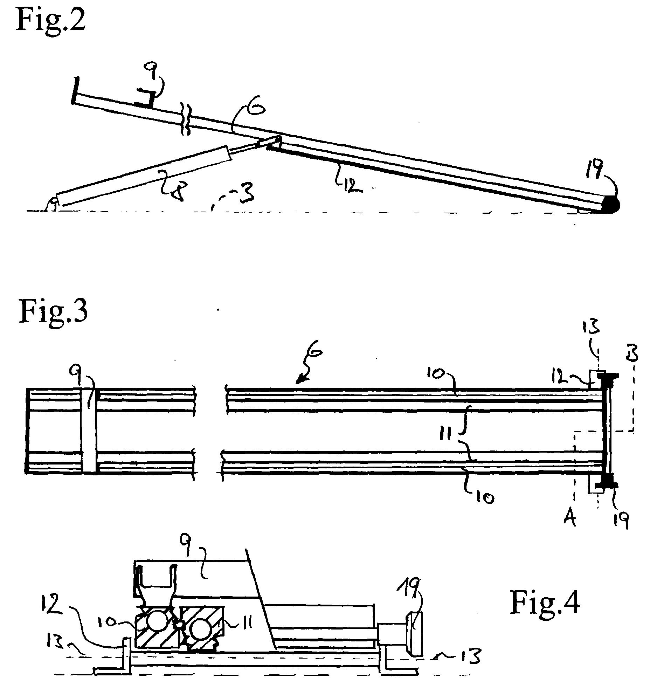

Die genannte Antriebseinrichtung besitzt zwei zueinander parallele Linearantriebe 11 (Fig. 3) in der Form von kolbenstangenlosen Zylindern, deren Kolben mit dem Tragrahmen 12 gekoppelt sind. Durch diese Linearantriebe 11 kann die Lasthalterung 6 bezüglich des Tragrahmens 12 und damit bezüglich des Fahrzeugdachs 3 in Längsrichtung bewegt werden. Ferner besitzt die Antriebseinrichtung einen pneumatischen Kolbenzylinder 8, der einerseits am Fahrzeugdach 3 und andererseits am Tragrahmen 12 angelenkt ist. Durch den Pneumatikzylinder 8 kann der Tragrahmen 12 um die genannte, zum hinteren Rand 7 des Fahrzeugdachs 3 etwa parallele Achse verschwenkt werden.

Die Lasthalterung 6 trägt ein Halteelement 9 für die Last 5. Das Halteelement 9 ist durch zwei weitere Linearantriebe 10 (Fig. 3) entlang der Lasthalterung 6 bewegbar. Die Linearantriebe 10 haben wiederum die Form von kolbenstangenlosen Pneumatikzylindern, deren Kolben mit dem Halteelement 9 gekoppelt sind. In den Figuren 2 und 3 ist das Halteelement 9 beim vorderen Ende der Pneumatikzylinder 10 stehend dargestellt.

Die vier Pneumatikzylinder 10, 11 bilden zusammen die Lasthalterung 6.

In den Figuren 3 und 4 ist auch die Schwenkachse 13 des Tragrahmens 12 dargestellt.

Figur 2 zeigt die gesamte Lade- und Abladevorrichtung vom Fahrzeug losgelöst in Seitenansicht. Die Last ist hier nicht dargestellt. Das Halteelement 9 besitzt in im Querschnitt C-förmiges, gegen vom bzw. oben offenes Teil, das an einem Querelement der Last 5, z.B. einer Leitersprosse angreifen kann, um die Last auf der Lasthalterung 6 nach oben bzw. nach vom zu ziehen. Auf dem Fahrzeugdach 3 ist ein Gegenelement (nicht dargestellt) befestigt, an welchem in der vorderen Endstellung des Halteelementes 9 dessen C-förmiges Teil mit seiner Öffnung anliegt. Dadurch ist eine Transportsicherung für die Last gebildet, indem das Querelement der Last zwischen dem C-förmigen Teil des Halteelementes 9 und dem Gegenelement gehalten ist. Es sind auch andere Ausführungsformen denkbar, in denen das Gegenelement beispielsweise am vorderen Ende der Lasthalterung 6 befestigt ist.

Figur 3 zeigt die Lade- und Abladevorrichtung in Draufsicht. Deutlich erkennbar sind die paarig ausgelegten kolbenstangenlosen Zylinder 10 und 11 der Lasthalterung 6. Die Zylinder 10, 11 sind fest miteinander verbunden und relativ zueinander nicht verschiebbar. Der in dieser Darstellung grossteils verdeckte Tragrahmen 12 ist um eine Achse 13 schwenkbar.

Figur 4 zeigt die Lade- und Abladevorrichtung in einem Querschnitt entlang der in Fig. 3 eingezeichneten Schnittlinie AB und vom Fahrzeugheck her gesehen. Wiederum deutlich zu erkennen sind die kolbenstangenlosen Zylinder 10, 11 einer Seite. Die äusseren Zylinder 11 bewegen die Lasthalterung 6 parallel zum Tragrahmen 12. Sie können also die auf der Lasthalterung 6 aufliegende Last 5 horizontal zum Fahrzeugdach 3 verschieben. Die Gummirollen 19 dienen dem Schutz der Lasthalterung 6 bei Bodenkontakt, wie er in der geneigten Lage 6.1 gem. Fig. 1 möglich ist.

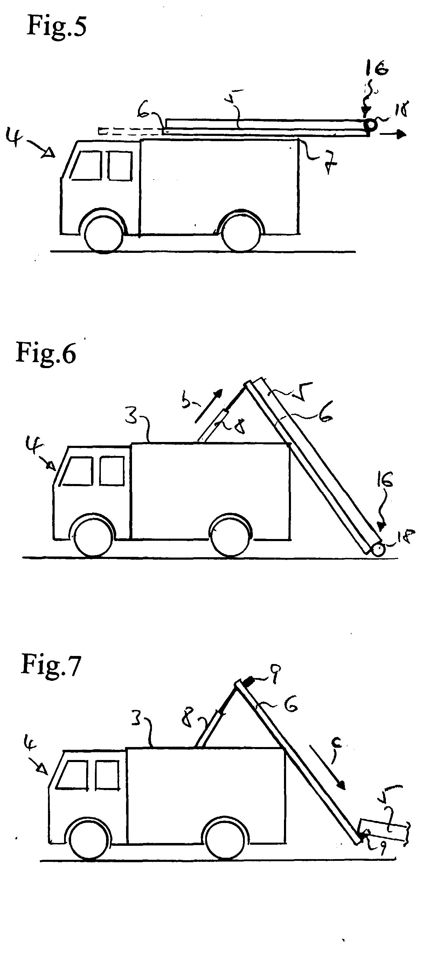

Die Figuren 5 bis 7 zeigen einen schematisierten Bewegungsablauf während des Abladevorgangs. Der Beladevorgang ist die Umkehrung des Ablaufes. Die Ladevorrichtung ist stark vereinfacht dargestellt.

Figur 5 zeigt die Verschiebung der Lasthalterung 6 in Längsrichtung des Fahrzeugs 4. Sie verlagert den Schwerpunkt der Last 5 hinter die Heckkante 7 des Fahrzeuges und bewirkt so das Absenken der Lasthalterung 6 unter die Dachkante 7 des Fahrzeugs 4. Bewirkt wird die Bewegung (Pfeil a) durch die inneren Bandzylinder 11 der Lasthalterung 6.

Figur 6 zeigt die Lasthalterung 6 in abgeneigter Position. Der dem Schwenken (Pfeil b) der Lasthalterung 6 dienende Pneumatikzylinder 8 ist dargestellt. Während des Abladevorgangs kann sie aktiv oder passiv die Neigebewegung verzögern und kontrollieren. Beim Aufladen muss er aktiv das Gewicht von Lasthalterung 6 und darauf aufliegender Last 5 aufheben. Die Last 5 ruht in der gleichen Position wie in Fig. 5 auf der Lasthalterung 6.

Figur 7 zeigt die geneigte Lasthalterung 6 mit zum Boden hinunter gefahrenem Halteelement 9. Zum Vergleich ist die Position des Halteelements 9 gemäss Fig. 5, 6 gleichfalls dargestellt. Die durch das Hinabfahren (Pfeil c) des Halteelements 9 auf dem Fussboden abgelegte Last 5 verfügt über Rollen 18. Es kann sich um ein Abschlusselement 21 mit daran angebrachten Rollen 18 handeln oder um fest an einer Last 5, z.B. einer Leiter, angebrachte Rollen 18.

## Patentansprüche

1. Lade- und Abladevorrichtung für eine langgestreckte, in Längsrichtung (2) auf einem Fahrzeugdach (3) liegend zu transportierende Last(5), insbesondere eine schwere Feuerwehrleiter, mit einer langgestreckten Lasthalterung (6) und mit einer Antriebseinrichtung (8, 11) zum Bewegen der Lasthalterung (6) aus einer etwa horizontalen Lage auf dem Fahrzeugdach in eine geneigte Lage, in der sich wenigstens ein Teil der Lasthalterung (6) neben einem Rand (7) des Fahrzeugdachs (3) schräg nach unten erstreckt, und umgekehrt, dadurch gekennzeichnet, dass die Lasthalterung (6) ein Halteelement (9) für die Last (5) trägt, welches durch wenigstens einen Linearantrieb (10) entlang der Lasthalterung (6) bewegbar ist.

2. Vorrichtung nach Anspruch 1, dadurch gekennzeichnet, dass der Linearantrieb (10) ein kolbenstangenloser Pneumatikzylinder ist, dessen Kolben mit dem Halteelement (9) gekoppelt ist.

3. Vorrichtung nach Anspruch 1 oder 2, dadurch gekennzeichnet, dass die Antriebseinrichtung (8, 11) wenigstens einen zweiten Linearantrieb (11) zum Bewegen der Lasthalterung (6) bezüglich des Fahrzeugdaches (3) in Längsrichtung (2) enthält.

4. Vorrichtung nach einem der Ansprüche 1 bis 3, dadurch gekennzeichnet, dass die Lasthalterung (6) auf einem Tragrahmen (12) angeordnet ist, der auf dem Fahrzeugdach (3) um einen zu dem genannten Rand (7) des Fahrzeugdaches (3) etwa parallele Achse (13) schwenkbar montiert ist und der durch einen Teil (8) der Antriebseinrichtung (8, 11) um diese Achse (13) schwenkbar ist.

5. Vorrichtung nach den Ansprüchen 3 und 4, dadurch gekennzeichnet, dass der zweite Linearantrieb (11) mit dem Tragrahmen (12) gekoppelt ist.

6. Vorrichtung nach Anspruch 5, dadurch gekennzeichnet, dass der zweite Linearantrieb (11) ein kolbenstangenloser Pneumatikzylinder ist, dessen Kolben mit dem Tragrahmen (12) gekoppelt ist.

7. Vorrichtung nach einem der Ansprüche 4 bis 6, dadurch gekennzeichnet, dass der genannte Teil (8) der Antriebseinrichtung (8, 11) aus wenigstens einem Pneumatikzylinder (8) besteht, der einerseits am Fahrzeugdach (3) und andererseits am Tragrahmen (12) angelenkt ist.

8. Vorrichtung nach einem der vorangegangenen Ansprüche, dadurch gekennzeichnet, dass das Halteelement (9) ein im Querschnitt C-förmiges Teil zur Aufnahme eines Querelementes, zum Beispiel einer Leitersprosse, der Last (5) aufweist, und dass auf dem Fahrzeugdach (3) ein Gegenelement befestigt ist, welches in einer Endposition des Halteelementes (9) die Öffnung zur Aufnahme des Querelements abdeckt.

9. Vorrichtung nach einem der vorangegangenen Ansprüche, gekennzeichnet durch eine am einen Ende (16) der langgestreckten Last (3) angebrachtes, abnehmbares Abschlusselement, welches Laufrollen (18) zum beweglichen Abstützen der Last (3) auf dem Fussboden trägt.
